# EUROPÄISCHE PATENTSCHRIFT

(11) **EP 1 261 497 B1**
(45) Veröffentlichungstag und Bekanntmachung des Hinweises auf die Patenterteilung: **24.09.2003**
(21) Anmeldenummer: 00993701.2
(22) Anmeldetag: 01.12.2000
(51) Int. Cl.: B60B 21/06

(54) **FAHRRAD-LAUFRAD**
BICYCLE WHEEL
ROUE DE BICYCLETTE

(30) Priorität: 07.01.2000 DE 10000399
(43) Veröffentlichungstag der Anmeldung: 04.12.2002
(73) Patentinhaber: Gubesch GmbH, 91489 Wilhelmsdorf (DE); Schürmann Fahrradteile GmbH & CO. KG, 33818 Leopoldshöhe-Greste (DE)
(72) Erfinder: GUBESCH, Werner, 90579 Langenzenn (DE); GOLDBECKER, Walter, 33330 Gütersloh (DE)
(74) Vertreter: LOUIS- PÖHLAU- LOHRENTZ
(86) Internationale Anmeldenummer: DE0004309
(87) Internationale Veröffentlichungsnummer: WO01049512

(56) Entgegenhaltungen:
- WO-A-96/11119
- DE-A- 4 444 044
- DE-U- 20 009 038
- FR-A- 2 761 300

## Beschreibung

Die Erfindung betrifft ein Fahrrad-Laufrad mit einer Metallfelge und mit einer Nabe gemäß dem Oberbegriff des Anspruchs 1.

Aus der DE 199 21 578 A1 ist ein Fahrrad-Laufrad bekannt, bei dem die distalen Enden der Speichen mit Hilfe von Verankerungselementen mit der Metallfelge verbunden sind. Die Verankerungselemente erstrecken sich durch Löcher in der Metallfelge hindurch. Die Anbringung der Verankerungselemente an der Metallfelge bedingt einen bestimmten Manipulations- und Herstellungsaufwand.

Ein ähnliches Fahrrad-Laufrad ist aus der WO 95/04666 A1 bekannt. Dort sind die distalen Enden der Speichen mit der Hohlkammerfelge einteilig ausgebildet. Die Hohlkammerfelge läuft um das Rad um. An der Hohlkammerfelge ist eine Metallfelge befestigt. Die Metallfelge ist als einfach U-förmig profilierte Felge ausgebildet. Zur Befestigung der U-förmig profilierten Metallfelge an der mit den distalen Enden der Speichen einstückig ausgebildeten Hohlkammerfelge sind dort geeignete Befestigungsmittel vorgesehen. Bei diesen Befestigungsmitteln handelt es sich beispielsweise um Rippen und um daran formmäßig angepaßte Rinnen o.dgl.

Aus der DE 38 33 749 A1 ist ein luftbereiftes Fahrzeugrad bekannt, das eine aus Blech hergestellte Felge mit sich radial erstreckenden Felgenhörnern und neben diesen am Umfang angeordneten Wulstsitzflächen für die Reifenfüße eines schlauchlosen Reifens sowie eine gegossene Radschüssel aufweist, die mit der Felge im Bereich des Felgenbettes verbunden ist. Das Felgenbett ist mit einer ein- oder zweiteilig ausgebildeten Felge in Form eines Tief- oder Flach- oder Hochbettes von einer sich axial erstreckenden Verlängerung der Radschüssel umschlossen.

Die DE 44 44 044 A1 offenbart ein Felgenrad für Fahrräder o.dgl. insbesondere mit einer Hohlkammerfelge mit von den gegenüberliegenden ringförmigen Flanken der Felge gebildeten Bremsflächen für eine Felgenbremse. Bei diesem bekannten Felgenrad ist das Felgenprofil mit über die ringförmigen Felgenflanken verteilt angeordneten, zu den Bremsflächen hin offenen Löchern oder Schlitzen ausgebildet. Die Felge kann in ihrem gegenüber den Profilöfmungen zur Radnabe hin versetzten Bereich mit Durchtrittsöffhungen versehen sein, die mit den Profilöffnungen mittelbar oder unmittelbar über den Profilinnenraum für eine Luftdurchströmung in Verbindung stehen. Die Durchtrittsöffnungen sind zweckmäßigerweise an der ringförmigen Felgeninnenseite vorgesehen, um Radspeichen befestigen zu können.

Aus der US-A- 5 707 114 ist ein gattungsgemäßes Fahrrad-Laufrad bekannt, das eine Hohlkammerfelge aufweisen kann, die mit Speichen mittels Verankerungselementen verbunden ist. Der Zusammenbau der Hohlkammerfelge mit den Speichen stellt dort einen nicht zu vernachlässigenden Arbeitsaufwand dar.

Der Erfindung liegt die Aufgabe zugrunde, das Fahrrad-Laufrad der eingangs genannten Art so weiterzubilden, daß die Verbindung des Speichenkörpers, d.h. der distalen Enden der Speichen, mit der Metallfelge keinen eigenen Montage- bzw. Herstellungsaufwand erfordert, wobei der Materialbedarf für diese Verbindung relativ gering ist.

Diese Aufgabe wird bei dem Fahrrad-Laufrad der eingangs genannten Art erfindungsgemäß durch die kennzeichnenden Merkmale des Anspruchs 1.

Das erfindungsgemäße Fahrrad-Laufrad weist den Vorteil auf, daß beim Spritzgießen des Speichenkörpers das Spritzgußmaterial durch die im Außengurt der Hohlkammerfelge ausgebildeten Löcher in den im Felgenhohlraum ausgebildeten und durch den Mittelgurt begrenzten Verankerungsraum eindringt und dort einen Speichen-Verankerungskörper bildet. Selbständige Verankerungselemente zur festen Verbindung der distalen Enden der Speichen mit der Metallfelge sind in vorteilhafter Weise also entbehrlich.

Nachdem der durch den Mittelgurt begrenzte umlaufende Verankerungsraum im Verhältnis zum verbleibenden Felgenhohlraum relativ klein sein kann, ergibt sich erfindungsgemäß der Vorteil, daß das Gesamtgewicht des Fahrrad-Laufrades durch den Speichen-Verankerungskörper nur unmerklich vergrößert wird.

Bei einem Fahrrad-Laufrad mit einer Hohlkammerfelge mit einem Mittelgurt ist es auch möglich, die distalen Enden der Speichen des Spritzguß-Speichenkörpers mit Hilfe von Verankerungselementen wie Schraubstiften o.dgl. mit der Metallfelge zu verbinden, weil dann sowohl der Außengurt als auch der Mittelgurt zur Fixierung, d.h. zum Durchschrauben der Verankerungselemente zur Verfügung steht.

Bei dem erfindungsgemäßen Fahrrad-Laufrad können die distalen Enden der Speichen voneinander getrennt vorgesehen sein und kann der Außengurt der Hohlkammerfelge mit einer der Anzahl Speichen entsprechenden Anzahl Löcher ausgebildet sein. Eine derartige Ausbildung des erfindungsgemäßen Fahrradlaufrades weist eine relativ kleine Anzahl Speichen, beispielsweise drei, vier, fünf oder sechs Speichen auf. Eine andere Möglichkeit besteht erfindungsgemäß darin, daß die distalen Enden der Speichen mit einem an der Außenseite der Metallfelge vorgesehenen Felgenring aus dem Material des Speichenkörpers einstückig verbunden sind. Bei einer solchen Ausbildung der zuletzt genannten Art ist die Anzahl der Löcher im Außengurt der Hohlkammerfelge von der Anzahl Speichen gleichsam unabhängig, weil der Felgenring um den Außengurt der Hohlkammerfelge umläuft. Bevorzugt ist es jedoch auch bei einer derartigen Ausbildung der zuletzt genannten Art, wenn der Außengurt der Hohlkammerfelge mit einer der Anzahl Speichen entsprechenden Anzahl Löcher ausgebildet ist, um optimale mechanische Eigenschaften zu erzielen. Die Speichenanzahl kann bei einem Fahrrad-Laufrad der zuletzt genannten Art relativ groß sein. Gleiches gilt für die Anzahl Löcher im Außengurt der Hohlkammerfelge.

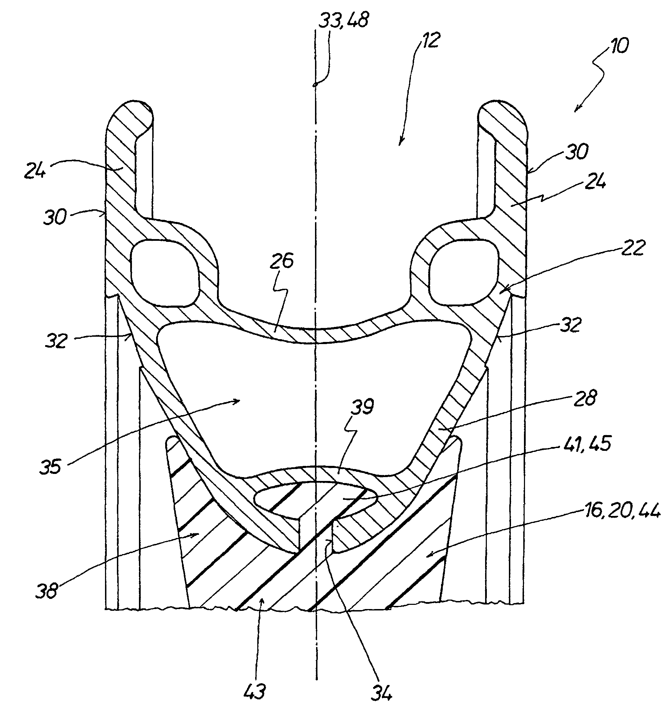

Ein vergrößert dargestellter Abschnitt eines erfindungsgemäßen Fahrrad-Laufrades, d.h. der Hohlkammerfelge und des mit dieser verbundenen distalen Endes einer Speiche des Spritzguß-Speichenkörpers des Fahrrad-Laufrades, ist in der Zeichnung dargestellt und wird nachfolgend beschrieben.

Die Figur zeigt in einer Schnittdarstellung ein Fahrrad-Laufrad 10 bzw. die Metallfelge 12 des Fahrrad-Laufrades 10 sowie abschnittweise den Kunststoff-Speichenkörper 16, der durch Spritzgießen realisiert ist. Der Kunststoff-Speichenkörper 16 weist eine Anzahl Speichen 20 auf, die in Umfangsrichtung der Metallfelge 12 gleichmäßig beabstandet vorgesehen sind.

Die Metallfelge 12 ist als Hohlkammerfelge 22 ausgebildet, sie weist Seitenwangen 24 sowie einen Innengurt 26 und einen Außengurt 28 auf.

Die Seitenwangen 24 der Hohlkammerfelge 22 sind mit voneinander abgewandten Außenflächen 30 ausgebildet, die als Bremsflächen dienen. An die Außenflächen 30 grenzen in radialer Richtung gesehen innenseitig umlaufende Aussparungen 32 an, in welchen (nicht dargestellte) kreisringförmige Reflexionselemente fixiert sein können.

Der Außengurt 28 ist entlang der durch die strichpunktierte Symmetrielinie 33 verlaufenden und zur Zeichnungsebene senkrechten Mittelebene 48 der Hohlkammerfelge 22 mit in Umfangsrichtung der Hohlkammerfelge 22 voneinander äquidistant beabstandeten Löchern 34 ausgebildet.

Durch den Innengurt 26 und den Außengurt 28 ist ein Felgenhohlraum 35 bestimmt.

Jede Speiche 20 weist ein der Hohlkammerfelge 22 zugeordnetes distales Ende 38 auf.

Die Hohlkammerfelge 22 ist im Felgenhohlraum 35 mit einem Mittelgurt 39 ausgebildet, der um die Hohlkammerfelge 22 umlaufend den Felgenhohlraum 35 zur Symmetrielinie 33 symmetrisch unterteilt. Durch den Mittelgurt 39 wird ein umlaufender Verankerungsraum 41 festgelegt, der durch die Löcher 34 im Außengurt 28 mit dem Äußeren der Hohlkammerfelge 22 verbunden ist.

Bei der Herstellung des Fahrrad-Laufrades 10 wird die Hohlkammerfelge 22 in ein entsprechendes Spritzgußwerkzeug eingebracht. Im Spritzgußwerkzeug wird dann der Kunststoff-Speichenkörper 16 hergestellt, wobei das Spritzgußmaterial durch die Löcher 34 im Außengurt 28 in den Verankerungsraum 41 der Hohlkammerfelge 22 eindringt und den umlaufenden Verankerungsraum 41 vollständig ausfüllt, so daß die distalen Enden 38 der Speichen 20 des Speichenkörpers 16 mit der Hohlkammerfelge 22 fest verbunden sind. Das Spritzgußmaterial bildet im Verankerungsraum 41 einen Speichen-Verankerungskörper 45, der durch die Löcher 34 im Außengurt 28 der Hohlkammerfelge 22 integral mit dem Speichenkörper 16 des Fahrrad-Laufrades 10 verbunden ist.

Die distalen Enden 38 der Speichen 20 können außerhalb der Hohlkammerfelge 22 voneinander getrennt vorgesehen sein, eine andere Möglichkeit besteht darin, daß die distalen Enden 38 der Speichen 20 mit einem um die Hohlkammerfelge 22 bzw. deren Außengurt 28 außenseitig umlaufenden Felgenring 43 aus dem Material des Speichenkörpers 16 einstückig verbunden sind.

Sind die distalen Enden 38 der Speichen 20 voneinander getrennt vorgesehen, so können die distalen Enden 38 der Speichen 20 mit Felgenlagerteilen 44 ausgebildet sein, wie sie in der Patentanmeldung 19921578.2 beschrieben sind.

## Patentansprüche

1. Fahrrad-Laufrad mit einer Metallfelge (12) und mit einer Nabe, die miteinander mittels eines Speichenkörpers (16) verbunden sind, wobei der Speichenkörper (16) ein mit der Nabe verbundenes Zentralteil und vom Zentralteil radial wegstehende Speichen (20) aufweist, deren distale Enden (38) mit der Metallfelge (12) verbunden sind, die eine Hohlkammerfelge (22) mit einem Außengurt (28) und einem Innengurt (26) aufweist, wobei durch den Außen- und den Innengurt (28 und 26) ein umlaufender Felgenhohlraum (35) bestimmt ist, und wobei die Metallfelge (12) einen den Felgenhohlraum (35) quer unterteilenden Mittelgurt (39) aufweist, durch den an den Außengurt (28) angrenzend ein umlaufender Verankerungsraum (41) festgelegt ist, wobei die distalen Enden (38) der Speichen (20) jeweils mit einem Speichen-Verankerungskörper (45) aus dem Material der Speichen (20) im Verankerungsraum (41) festgelegt sind,
**dadurch gekennzeichnet,**
**daß** der Speichenkörper (16) ein Kunststoff-Spritzguß-Speichenkörper ist, wobei die Speichen (20) mit dem Zentralteil material einstückig verbunden sind, **daß** der Außengurt (28) mit voneinander in Umfangsrichtung beabstandeten Löchern (34) ausgebildet ist, und **daß** die distalen Enden (38) der Speichen (20) durch die Löcher (34) im Außengurt (28) hindurch materialeinstüddg mit einem umlaufenden Speichen-Verankerungskörper (45) aus dem Material des Speichenkörpers (16) verbunden sind, wobei der Speichen-Verankerungskörper (45) den durch den Außengurt (28) und den Mittelgnrr (39) begrenzten Verankerungsraum (41) vollständig ausfüllt.

2. Fahrrad-Laufrad nach Anspruch 1,
**dadurch gekennzeichnet,**
**daß** der Außengurt (28) der Hohlkammerfelge (22) mit einer der Anzahl Speichen (20) entsprechenden Anzahl Löcher (34) ausgebildet ist.

3. Fahrrad-Laufrad nach Anspruch 1,
**dadurch gekennzeichnet,**
**daß** die distalen Enden (38) der Speichen (20) mit einem Felgenring (43) aus dem Material des Speichenkörpers (16) einstückig verbunden sind.

## Claims

1. Bicycle wheel having a metal rim (12) and having a hub, which are connected to one another by means of a spoke body (16), the spoke body (16) having a central portion which is connected to the hub and spokes (20) which project radially from the central portion and whose distal ends (38) are connected to the metal rim (12) which has a hollow-chambered rim (22) with an external flange (28) and an internal flange (26), a peripherally extending hollow rim chamber (35) being determined by the external and internal flanges (28 and 26), and the metal rim (12) having a central flange (39) which transversely subdivides the hollow rim chamber (35) and which establishes a peripherally extending anchoring chamber (41) adjoining the external flange (28), the distal ends (38) of the spokes (20) each being fixed in the anchoring chamber (41) by a spoke-anchoring body (45) made from the material of the spokes (20), **characterized in that** the spoke body (16) is a plastic injection-moulded spoke body, the spokes (20) being integrally connected to the central portion, **in that** the external flange (28) is designed with holes (34) which are spaced apart from one another in the peripheral direction, and **in that** the distal ends (38) of the spokes (20) are integrally connected through the holes (34) in the external flange (28) to a peripherally extending spoke-anchoring body (45) comprising the material of the spoke body (16), the spoke-anchoring body (45) completely filling the anchoring chamber (41) delimited by the external flange (28) and the central flange (39).

2. Bicycle wheel according to Claim 1, **characterized in that** the external flange (28) of the hollow-chambered rim (22) is designed with a number of holes (34) which matches the number of spokes (20).

3. Bicycle wheel according to Claim 1, **characterized in that** the distal ends (38) of the spokes (20) are integrally connected to a rim ring (43) comprising the material of the spoke body (16).

## Revendications

1. Roue de bicyclette du type comportant une jante métallique (12) et un moyeu, qui sont réunis ensemble par un système de rayons (16), le système de rayons (16) se composant d'une portion centrale reliée au moyeu et de rayons (20) s'éloignant radialement de la portion centrale et dont les extrémités distales (38) sont reliées au moyeu métallique (12), lequel se compose d'une jante à chambre creuse (22) comportant une ceinture extérieure (28) et une ceinture intérieure (26), un espace creux formant jante périphérique (35) étant déterminé par les ceintures extérieure et intérieure (28 et 36), et la jante métallique (12) présentant une ceinture intermédiaire (39) subdivisant transversalement l'espace creux formant jante (35) et par laquelle est fixé à la ceinture extérieure (28) qu'il délimite, un volume d'ancrage périphérique (41), les extrémités distales (38) des rayons (20) étant fixées à un corps d'ancrage de rayons (45) du matériau des rayons (20) dans l'espace d'ancrage (41),
**caractérisé en ce que**
le système de rayons (16) consiste en un système de rayons en matière plastique moulée par injection, les rayons (20) étant réunis en une seule pièce à la portion centrale, **en ce que** la ceinture extérieure (28) comporte des trous (34) espacés les uns des autres dans la direction périphérique, et **en ce que** les extrémités distales (38) des rayons (20) sont réunies en une seule pièce par les trous (34) de la ceinture extérieure (28) avec un corps d'ancrage de rayons périphériques (45) en matériau du système de rayons (16), le corps d'ancrage (41) délimité par la ceinture extérieure (28) et la ceinture intermédiaire (39).

2. Roue de bicyclette selon la revendication 1, **caractérisée en ce que** la ceinture extérieure (28) de la jante à chambre creuse (22) comporte un nombre de trous (34) correspondant au nombre de rayons (20).

3. Roue de bicyclette selon la revendication 1, **caractérisée en ce que** les extrémités distales (38) des rayons (20) sont réunies en une seule pièce du matériau du système de rayons (16) avec un anneau de jante (43).
